# EUROPÄISCHE PATENTANMELDUNG

(11) **EP 1 248 077 A2**
(43) Veröffentlichungstag der Anmeldung: **09.10.2002**
(21) Anmeldenummer: 02005481.3
(22) Anmeldetag: 09.03.2002
(51) Int. Cl.: G01D 5/244

(54) **Verfahren zur Störlichtunterdrückung bei einem optischen Messgerät und Messgerät**

(30) Priorität: 02.04.2001 DE 10117838
(71) Anmelder: Omron Electronics Manufacturing of Germany GmbH, 71154 Nufringen (DE)
(72) Erfinder: Adamietz, Hubert, 73760 Ostfildern (DE); Sakai, Yasunobu, 71154 Nufringen (DE); Schurer, Martin, 71154 Nufringen (DE); Ojemann, Folke, 73760 Ostfildern (DE); Betz, Jochen, Dr., 71263 Weil der Stadt (DE); Stauss, Gerold, 71083 Herrenberg (DE)
(74) Vertreter: Patentanwälte , Ruff, Wilhelm, Beier, Dauster & Partner

(57) **Zusammenfassung**

2.1. Die Erfindung betrifft ein Verfahren zur Störlichtunterdrückung bei optischen Messgeräten mit einem Lichtsender (10) und einem Lichtempfänger (12), wobei das vom Lichtsender gesendete Lichtsignal Lichtimpulse aufweist.
2.2. Erfindungsgemäß werden vom Lichtempfänger (12) entsprechend den empfangenen Lichtimpulsen erzeugte Signalimpulse unterdrückt, deren Zeitdauer kleiner als ein vorbestimmter Grenzwert und/oder gleich dem vorbestimmten Grenzwert ist.
2.3. Verwendung beispielsweise bei Reflexionslichtschranken für Sicherheitsanwendungen.

## Beschreibung

Die Erfindung betrifft ein Verfahren zur Störlichtunterdrückung bei optischen Messgeräten mit einem Lichtsender und einem Lichtempfänger, wobei das vom Lichtsender gesendete Lichtsignal Lichtimpulse aufweist.

Die Erfindung betrifft auch ein Messgerät mit einem Lichtsender und einem Lichtempfänger zur Durchführung des erfindungsgemäßen Verfahrens.

Aus der internationalen Offenlegungsschrift WO 96/38742 ist eine Vorrichtung zum Eliminieren von Störsignalen bei einer Lichtschranke bekannt, bei der im Empfänger ein Komparator vorgesehen ist, der Störsignale mit kleiner Amplitude ausfiltert. Ein Sender sendet periodisch Lichtimpulse mit einer bekannten Sendefrequenz aus, die auch im Empfänger vorgegeben ist, so dass ein Aktivierungsintervall des Empfängers synchron zu dem gesendeten Lichtsignal eingestellt werden kann. Eine auf das Aktivierungsintervall folgende Pause ist auf den Abstand der gesendeten Lichtimpulse zueinander abgestimmt.

Aus der deutschen Patentschrift DE 42 24 784 C2 ist ein Verfahren zum Eliminieren des Einflusses von Störlicht bei einer Lichtschranke bekannt, bei dem innerhalb eines ersten Zeitfensters, das kleiner ist als ein Minimalabstand von Störimpulsen, beispielsweise von einer Leuchtstoffröhre, zwei Impulsgruppen kodierten Lichts gesendet werden. Selbst bei Überlagerung eines Störimpulses mit einer Impulsgruppe kommt daher immer eine nicht gestörte Impulsgruppe am Empfänger an. Dem Empfänger genügt der Empfang einer Impulsgruppe, um ein Signal für einen störungsfreien Betrieb zu erzeugen.

Aus der deutschen Offenlegungsschrift DE 31 19 876 A1 ist ein Infrarot-Sende-Empfangssystem, beispielsweise für Lichtschrankenanordnungen, bekannt, bei dem eine Mehrfachverschlüsselung der gesendeten Signale vorgesehen ist. Eine solche Mehrfachverschlüsselung kann beispielsweise dadurch erreicht werden, dass ein impulskodiertes Signal mit einer Trägerfrequenz moduliert ist. Durch die Mehrfachverschlüsselung können mehrere Lichtschrankenanordnungen nebeneinander betrieben werden, wenn jede Lichtschrankenanordnung eine unterschiedliche Verschlüsselung verwendet. Die verwendete Trägerfrequenz liegt bei 31,25 kHz.

Moderne Fluoreszenzlampen erzeugen ein mit hohen Frequenzen moduliertes Licht, wobei bei sogenannten Energiesparlampen die Grundfrequenz bei ca. 100 kHz liegt. Bei geradlinigen, rohrförmigen Fluoreszenzlampen, sogenannten Leuchtstoffröhren, ist das Licht in der Mitte der Röhre mit einer Grundfrequenz von ca. 60 bis 80 kHz moduliert. An den Enden der Röhre liegt die Grundfrequenz bei ca. 30 bis 40 kHz, steile Flanken bedingen jedoch einen hohen Oberwellenanteil durch den noch höhere Frequenzen eine Rolle spielen. Die wachsende Ausbreitung der Fluoreszenzlampen verursacht zunehmend Funktionsprobleme bei herkömmlichen optischen Sensoren. Besonders kritisch ist dies bei Sensoren für Sicherheitsanwendungen, die eine vorgegebene Störimmunität aufweisen müssen. Vor allem bei optischen Messgeräten mit voneinander getrenntem Lichtsender und Lichtempfänger, sogenannten Einweglichtschranken, ist die Fremdlichtunterdrückung ein kritischer Punkt, da es in diesem Fall nicht möglich ist, über eine Synchronisierungsleitung den Lichtsender und den Empfänger aufeinander zu synchronisieren.

Mit der Erfindung soll bei optischen Messgeräten eine verbesserte Unterdrückung von Störlicht, insbesondere von Fluoreszenzlampen und sogenannten Energiesparlampen, erreicht werden.

Erfindungsgemäß ist hierzu ein Verfahren zur Störlichtunterdrückung bei optischen Messgeräten mit Lichtsender und Lichtempfänger, wobei das vom Lichtsender gesendete Lichtsignal Lichtimpulse aufweist, vorgesehen, bei dem vom Lichtempfänger entsprechend den empfangenen Lichtimpulsen erzeugte Signalimpulse unterdrückt werden, deren Zeitdauer kleiner als ein vorbestimmter Grenzwert und/oder gleich dem vorbestimmten Grenzwert ist.

Durch diese Maßnahmen können sehr schmale Störimpulse, die aufgrund ihrer geringen Breite nicht vom Nutzsignal herrühren können, eliminiert werden. Der Grenzwert wird in Abhängigkeit der Breite eines Lichtimpulses des Senders abgestimmt.

In Weiterbildung der Erfindung ist vorgesehen, dass die Signalimpulse, deren Zeitdauer größer als der vorbestimmte Grenzwert oder gleich dem vorbestimmten Grenzwert ist, eine konstante Zeitdauer erhalten.

Durch diese Maßnahmen hängt das Ergebnis der Auswertung eines Impulspaketes nur noch von der Anzahl, nicht von der Zeitdauer der empfangenen Impulse ab. Dies ist deshalb vorteilhaft, da auch Impulse konstanter Zeitdauer gesendet wurden und dadurch Übertragungsverzerrungen und Störungen durch zusätzliche Fremdimpulse ausgeschaltet werden können.

In Weiterbildung der Erfindung ist vorgesehen, die konstante Zeitdauer der Signalimpulse um einen vorbestimmten Betrag zu verlängern.

Beispielsweise ist die konstante Zeitdauer relativ kurz, so dass zunächst schmale Impulse mit konstanter Breite erzeugt werden, die dann nachfolgend verbreitert werden. Dadurch entsteht eine konstante, relativ lange Zeitdauer der Impulse. Durch diese Maßnahme kann die Schwelle eines Komparators, der auf einen Integrator folgt, als Kriterium für ein Impulspaket angehoben werden. Die Schaltschwelle erreicht somit einen guten Signal-/Rausch-Abstand, wodurch der Schaltausgang des Messgeräts stabiler wird. Dieser Komparator entscheidet, ob das Impulspaket als Signal des Senders anerkannt wird.

In Weiterbildung der Erfindung ist vorgesehen, dass die Signalimpulse mit konstanter Zeitdauer über einen vorbestimmten Zeitraum integriert werden und das Integrationsergebnis daraufhin mittels einer Schwelle bewertet wird.

Durch Integration kann der Einfluss einzelner Störimpulse zurückgedrängt werden. Einzelne Störimpulse können das Ergebnis nicht verfälschen, da sie bei der Integration die auf ein Impulspaket abgestimmte Schwelle nicht erreichen. Das Ergebnis der Bewertung mittels der Schwelle entspricht der Bewertung eines Impulspakets.

In Weiterbildung der Erfindung ist vorgesehen, dass vom Lichtsender wenigstens zwei in einem vorbestimmten ersten Abstand zueinander liegende Impulspakete als Mehrfachimpuls und nach einem vorbestimmten zweiten Abstand wenigstens zwei weitere, in dem vorbestimmten ersten Abstand zueinander liegende Impulspakete als weiterer Mehrfachimpuls ausgesendet werden, wobei eine Gesamtdauer der beiden Mehrfachimpulse zuzüglich des zweiten Abstands kürzer als ein Minimalabstand üblicher Störimpulse ist. Eine Übertragung des Lichts vom Lichtsender wird detektiert, wenn mindestens zwei in dem ersten vorbestimmten Abstand liegende Impulspakete als Signale des Senders anerkannt werden. Vorteilhafterweise wird zwischen diesen beiden Impulspaketen das Empfängersignal nicht ausgewertet.

Durch dieses sogenannte Doppelpulsverfahren wird die Störimmunität weiter erhöht, da nur die Präsenz der beiden Impulspakete in dem ersten vorbestimmten Abstand kontrolliert wird und das Signal des Empfängers zwischen diesen beiden Impulspaketen sowie außerhalb der beiden Impulspakete nicht von Bedeutung ist. Ein Störsignal, das neben die beiden Impulspakete fällt, wird somit nicht betrachtet.

Fällt ein Störsignal direkt auf ein Impulspaket, so wird das Impulspaket trotzdem als gültig erkannt. Die Impulspakete weisen eine Trägerfrequenz auf, da ein Impulspaket aus mehreren Impulsen besteht. Durch den Bandpassfilter am Empfängereingang werden somit nur die Störsignale, nicht aber die Impulspakete, herausgefiltert.

Als Kriterium für eine gültige Übertragung dient somit nicht der gesamte Verlauf des Sendesignals am Empfänger, sondern nur die Präsenz von zwei Impulspaketen zum richtigen Zeitpunkt.

In Weiterbildung der Erfindung ist vorgesehen, dass nach dem Empfangen eines Impulspakets oder Mehrfachimpulses und einer störungsfreien Bewertung der Übertragung eine Weiterleitung eines Empfangssignals vom Empfänger für einen vorbestimmten Zeitraum gesperrt wird, der auf dem vorbestimmten Abstand der Impulspakete zueinander oder einen vorbestimmten Abstand der Mehrfachimpulse zueinander abgestimmt ist.

Eine solche Signalsperre bewirkt bei störungsfreiem Empfang eine Synchronisierung des Lichtempfängers auf den Lichtsender, indem der Lichtempfänger auf die Sendefrequenz des Lichtsenders getriggert wird. Eine solche Synchronisierung kann erfolgen, ohne dass eine Synchronisierungsleitung zwischen Lichtsender und Lichtempfänger erforderlich wäre.

In Weiterbildung der Erfindung ist vorgesehen, dass vom Lichtempfänger entsprechend den empfangenen Lichtimpulsen erzeugte Signalimpulse in ihrer Signalhöhe auf einen vorbestimmten Grenzwert begrenzt werden. Durch eine solche Signalnormierung kann der Störeinfluss sehr kurzer, hochenergetischer Blitze begrenzt werden.

In Weiterbildung der Erfindung sind die Lichtimpulse in von einander beabstandeten Impulspaketen angeordnet und folgen innerhalb eines Impulspakets mit einer Trägerfrequenz aufeinander und im Lichtempfänger erfolgt unmittelbar nach dem Empfangen des Lichtsignals und Umsetzen des Lichtsignals in ein elektrisches Signal eine Bandpassfilterung des elektrischen Signals im Bereich der Trägerfrequenz.

Indem die Lichtimpulse des Lichtsignals in voneinander beabstandeten Impulspaketen angeordnet werden und innerhalb eines Impulspakets mit einer Trägerfrequenz aufeinander folgen, wird eine sogenannte Doppelmodulation durchgeführt, wobei der Abstand der Impulspakete zueinander auf eine Messstrecke des Messgeräts abgestimmt ist, so dass sich keine Doppeldeutigkeiten im Messbereich ergeben können. Die Trägerfrequenz ist so hoch gewählt, dass potentielles Störlicht ausgeschaltet werden kann und liegt beispielsweise bei 2 MHz. Innerhalb eines Impulspakets liegen in diesem Fall dann Lichtimpulse mit einer konstanten Breite von 250 ns und einer konstanten Höhe in einem konstanten Abstand von 250 ns zueinander. Eine Bandpassfilterung unmittelbar nach dem Empfangen des Lichtsignals und dessen Umsetzung in ein elektrisches Signal, insbesondere vor oder im Eingangsverstärker, schließt eine Sättigung des Eingangsverstärkers durch Störlicht aus. Durch diese Bandpassfilterung wird eine Störlichtimmunität wesentlich erhöht.

In Weiterbildung der Erfindung wird das elektrische Signal integriert und daraufhin mittels einer Schwelle bewertet.

Das der Erfindung zugrunde liegende Problem wird auch mit einem Messgerät mit einem Lichtsender und einem Lichtempfänger zur Durchführung des erfindungsgemäßen Verfahrens gelöst, bei dem der Lichtempfänger einen Pulsbreitenkomparator aufweist, der Signalimpulse eines Empfangssignals unterdrückt, deren Zeitdauer kleiner als ein vorbestimmter Grenzwert und/oder gleich dem vorbestimmten Grenzwert ist.

In Weiterbildung der Erfindung weist der Pulsbreitenkomparator Signalimpulsen, deren Zeitdauer größer als der vorbestimmte Grenzwert oder gleich dem vorbestimmten Grenzwert ist, eine konstante Zeitdauer zu.

Vorteilhafterweise ist vorgesehen, dass der Lichtempfänger einen Resonanzkreis aufweist, dessen Resonanzfrequenz der Mittenfrequenz des Bandpasses entspricht.

Mittels eines Resonanzkreises kann ein selektiver Bandpass realisiert werden, der eine Sättigung des Verstärkers durch Störlicht verhindert. Ein solcher Resonanzkreis kann beispielsweise eine Induktivität zwischen Empfängerfotoelement und Masse aufweisen.

Vorteilhafterweise ist der Lichtempfänger mit allen weiteren Komponenten zur Signalverarbeitung in einem gemeinsamen Gehäuse vorgesehen.

Dadurch wird ein flexibel einsetzbares, handhabbares Messgerät geschaffen.

Vorteilhafterweise weist der Lichtsender eine Modulationsschaltung zum Modulieren von Impulssignalen mit einer Trägerfrequenz auf und der Lichtempfänger weist in Bezug auf einen Signalfluss unmittelbar hinter einem Empfängerfotoelement eine Bandpassschaltung auf.

Vorteilhafterweise ist bei dem erfindungsgemäßen Messgerät in dem Lichtempfänger in Bezug auf den Signalfluss unmittelbar hinter dem Empfängerfotoelement eine Verstärkerschaltung mit Bandpasseigenschaften vorgesehen, wobei das Empfängerfotoelement schon Bestandteil des Bandpassfilters sein kann.

Durch eine solche Integration eines Bandpasses in den Verstärker kann ein kompakter Aufbau erreicht werden. Die Verstärkerschaltung mit Bandpasseigenschaften wird vorteilhafter Weise durch passive Bauelemente und Transistoren realisiert.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine schematische Darstellung eines Messgeräts gemäß einer ersten bevorzugten Ausführungsform der Erfindung,
- Fig. 2: eine schematische Darstellung eines Messgeräts gemäß einer weiteren Ausführungsform der Erfindung,
- Fig. 3: ein Impulsdiagramm eines gesendeten Lichtsignals und
- Fig. 4: eine schematische Darstellung eines Abschnitts des Messgeräts der Fig. 2 zusammen mit einer Darstellung der verarbeiteten Signale.

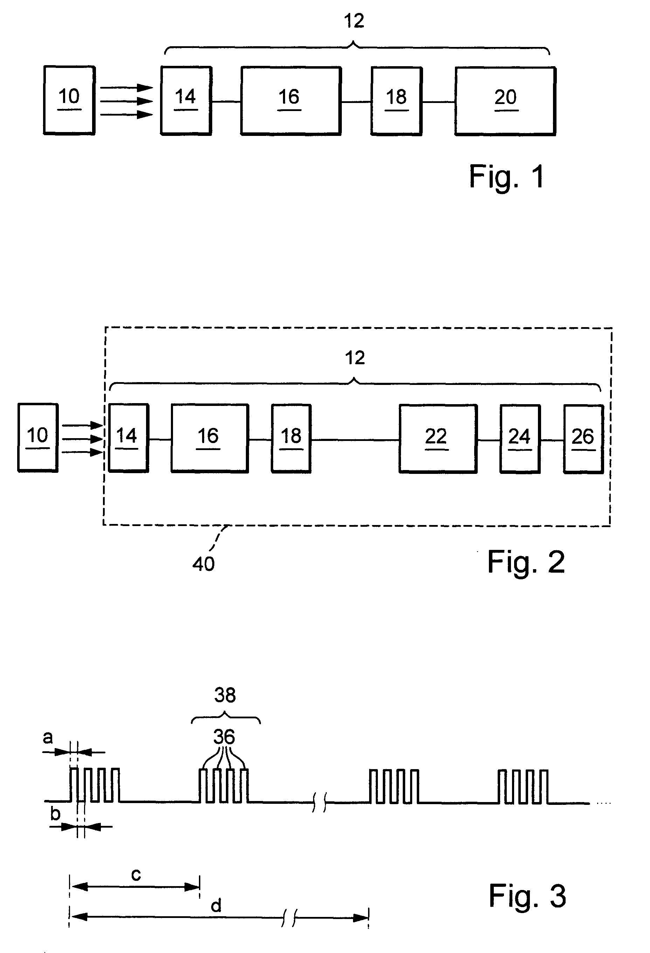

Das in der Fig. 1 schematisch dargestellte optische Messgerät weist einen Lichtsender 10 und einen Lichtempfänger 12 auf. Ein vom Lichtsender 10 gesendetes Lichtsignal wird in einer Fotodiode 14 in ein elektrisches Signal umgesetzt. Das elektrische Signal wird von der Fotodiode 14 an einen Verstärker 16 mit Bandpasseigenschaften übergeben. Die Mittenfrequenz des in den Verstärker 16 integrierten Bandpasses liegt bei 2 MHz und damit oberhalb der Modulationsfrequenzen von Störlicht, das von Fluoreszenzlampen ausgesendet wird. Indem der Bandpass in den Verstärker 16 integriert ist, kann eine Sättigung des Verstärkers 16 durch Störlicht vermieden werden. Bei genügend starker Intensität des Störlichts wäre nämlich eine Sättigung eines Eingangsverstärkers auch dann zu befürchten, wenn die Wellenlänge des Störlichts lediglich am Rande des Empfindlichkeitsbereichs des Fotoelements läge.

Das im Verstärker 16 mit Bandpasseigenschaften verstärkte und gefilterte Signal wird dann an einen Komparator 18 übergeben. Im Komparator 18 wird das Signal in seiner Signalhöhe auf einen vorbestimmten Grenzwert begrenzt, d.h. das Signal wird in seiner Höhe digitalisiert. Dadurch kann der Störeinfluss hochenergetischer Blitze ausgeschaltet werden.

Nach dem Komparator 18 wird das Signal in einer ersten Auswertestufe 20 weiter verarbeitet. In der ersten Auswertestufe 20 wird geprüft, ob nach einem ersten erkannten Impulspaket zu einem festgelegten Zeitpunkt ein zweites Impulspaket erkannt wird. Bei positivem Ergebnis in der Auswertestufe 20 wird das empfangene Licht als Licht vom eigenen Sender 10 erkannt und das Empfängersignal wird daraufhin für eine bestimmte Zeit nicht gewertet. An die Auswerteeinheit 20 kann sich ein Integrator und ein Komparator anschließen.

Fig. 3 zeigt das Impulsdiagramm des vom Lichtsender 10 ausgesendeten Lichtsignals. Zu erkennen ist, dass mehrere Lichtimpulse 36 in einem Impulspaket 38 angeordnet sind. Jeder Lichtimpuls 36 hat eine Dauer a von 250 ns. Auf jeden Lichtimpuls 36 folgt eine Pause mit der Dauer b, die ebenfalls 250 ns beträgt. Jedes Impulspaket 38 weist vier aufeinander folgende Lichtimpulse 36 auf, die entsprechend der Zeitdauern a und b von 250 ns mit einer Trägerfrequenz von 2 MHz aufeinander folgen.

Die Impulspakete 38 folgen in einer Zeitdauer c von 10 µs aufeinander. Zwischen jedem, aus zwei Impulspaketen 38 bestehenden Doppelimpuls liegt wiederum ein Abstand von d von 100 µs.

Die Trägerfrequenz von 2 MHz schafft einen genügenden Abstand zu den Modulationsfrequenzen des Störlichts von Fluoreszenzlampen. Dadurch kann in dem Verstärker 16 ein einfacher Bandpassfilter verwendet werden und dennoch eine ausreichende Störlichtunterdrückung erzielt werden.

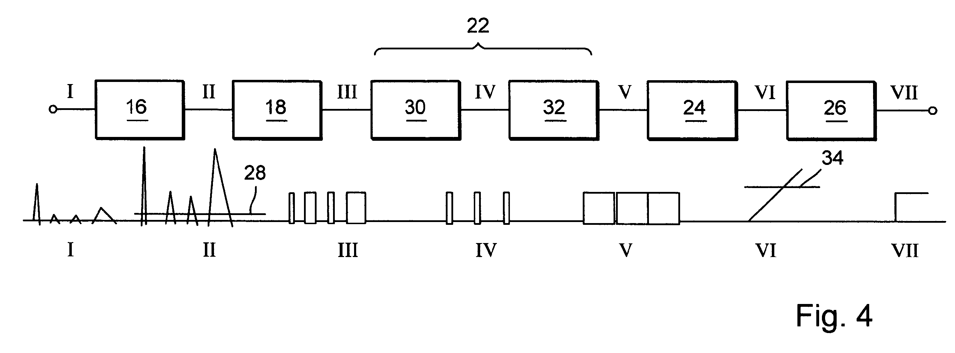

Anhand von Fig. 2 und Fig. 4 wird im folgenden eine Signalverarbeitung in dem erfindungsgemäßen Messgerät gemäß der weiteren Ausführungsform detaillierter erläutert. Alle Komponenten des Lichtempfängers 12 sind in einem gemeinsamen Gehäuse 40 angeordnet.

Nach Übergabe des von der Fotodiode 14 erzeugten Signals an den Verstärker 16 wird im Signalfluss unmittelbar nach der Fotodiode 14 eine Bandpassfilterung des Signals vorgenommen, wobei eine Mittenfrequenz des Bandpasses gleich der Trägerfrequenz von 2 MHz ist. Nach erfolgter Bandpassfilterung wird das Signal verstärkt und gleichgerichtet, und am Ausgang des Verstärkers ergibt sich beispielsweise der in Fig. 3 im Abschnitt II dargestellte Signalverlauf.

Eine Schwelle des Komparators 18 ist in dem Signalverlauf des Abschnitts II durch eine waagrechte Linie 28 angedeutet. Nach Bewertung des Signalverlaufs in dem Komparator 18 ergibt sich der in Fig. 4 im Abschnitt III dargestellte Signalverlauf, der mehrere Impulse mit jeweils unterschiedlicher Breite aufweist.

Dieser Signalverlauf im Abschnitt III wird an eine Auswerteeinheit 22 mit einem Pulsbreitenkomparator 30 übergeben, der Impulse mit einer Breite, die unterhalb eines vorbestimmten Grenzwerts liegt, unterdrückt. Sehr schmale Störimpulse, die aufgrund ihrer geringen Breite nicht vom gesendeten Lichtsignal herrühren können, werden dadurch eliminiert. Sehr breite Impulse können dahingegen nicht mit Sicherheit als falsch bezeichnet werden, da möglicherweise eine Überlagerung eines Nutzimpulses mit einem Störimpuls vorliegt. Signalimpulse, deren Breite oberhalb eines vorbestimmten Grenzwerts liegt, werden auf eine einheitliche Impulsbreite reduziert, damit alle Impulse eine einheitliche Breite aufweisen. Da der Pulsbreitenkomparator 30 nur dann ein Signal ausgibt, wenn die Breite eines ankommenden Impulses oberhalb eines vorbestimmten Grenzwerts liegt, ergibt sich am Ausgang des Pulsbreitenkomparators 30 der in Fig. 4 im Abschnitt IV dargestellte Signalverlauf. Im Abschnitt IV sind nur noch drei Impulse vorhanden, da der erste, schmale Impuls des Signalverlaufs im Abschnitt III unterdrückt wurde. Alle drei Impulse im Abschnitt IV weisen eine konstante Breite auf. Das Auswertungsergebnis hängt folglich nur noch von der Anzahl der empfangenen Impulse und nicht von deren Breite ab.

Zur Erhöhung der Schaltschwelle in einem Komparator 26 ist in der Auswerteeinheit 22 ein Pulsexpander 32 vorgesehen, der die Breite der Impulse vergrößert, so dass sich nach dem Pulsexpander 32 der in Fig. 3 im Abschnitt V dargestellte Signalverlauf ergibt. Die Verbreiterung der Impulse erfolgt deshalb, um das Signal eines nachfolgenden Integrators 24 höher zu legen und damit für die Schaltschwelle im Komparator 26 einen größeren Signal-/Rausch-Abstand erreichen zu können.

Nach Integration der verbreiterten Impulse aus dem Abschnitt V im Integrator 24 ergibt sich der in Fig. 4 im Abschnitt VI dargestellte Signalverlauf, der mittels einer ansteigenden Rampe symbolisiert ist.

Dieser Signalverlauf wird mittels des Komparators 26 bewertet, dessen Schwelle durch eine horizontale Linie 34 angedeutet ist. Nach Bewertung des Signalverlaufs durch den Komparator 26 ergibt sich schließlich der in Fig. 4 im Abschnitt VII dargestellte Signalverlauf, der durch ein logisch hohes Signal eine als gültig bewertete Übertragung eines Lichtsignals vom Lichtsender 10 an den Lichtempfänger 12 anzeigt.

Bei der anhand der Fig. 2 und der Fig. 4 beschriebenen Ausführungsform des erfindungsgemäßen Messgeräts wird auf die Verwendung des Abstands von Impulspaketen als Schaltkriterium verzichtet. Infolgedessen müssen vom Lichtsender 10 nur einzelne Impulspakete gesendet werden. Die beiden beschriebenen Ausführungsformen des erfindungsgemäßen Messgeräts und die beschriebenen Verfahrensschritte zur Auswertung des Lichtsignals können jedoch auch in geeigneter Weise kombiniert werden.

## Patentansprüche

1. Verfahren zur Störlichtunterdrückung bei optischen Messgeräten mit Lichtsender (10) und Lichtempfänger (12), wobei das vom Lichtsender (10) gesendete Lichtsignal Lichtimpulse aufweist, **dadurch gekennzeichnet, dass** vom Lichtempfänger (12) entsprechend den empfangenen Lichtimpulsen erzeugte Signalimpulse unterdrückt werden, deren Zeitdauer kleiner als ein vorbestimmter Grenzwert und/oder gleich dem vorbestimmten Grenzwert ist.

2. Verfahren zur Störlichtunterdrückung nach Anspruch 1, **dadurch gekennzeichnet, dass** die Signalimpulse, deren Zeitdauer größer als der vorbestimmte Grenzwert oder gleich dem vorbestimmten Grenzwert ist, eine konstante Zeitdauer erhalten.

3. Verfahren zur Störlichtunterdrückung nach Anspruch 2, **dadurch gekennzeichnet, dass** die konstante Zeitdauer der Signalimpulse um einen vorbestimmten Betrag verlängert wird.

4. Verfahren zur Störlichtunterdrückung nach Anspruch 2 oder 3, **dadurch gekennzeichnet, dass** die Signalimpulse mit konstanter Zeitdauer über einen vorbestimmten Zeitraum integriert werden und das Integrationsergebnis daraufhin mittels einer Schwelle bewertet wird.

5. Verfahren zur Störlichtunterdrückung nach einem der vorstehenden Ansprüche, **dadurch gekennzeichnet, dass** vom Lichtsender wenigstens zwei in einem vorbestimmten ersten Abstand zueinander liegende Impulspakete als Mehrfachimpuls und nach einem vorbestimmten zweiten Abstand wenigstens zwei weitere, in dem vorbestimmten ersten Abstand zueinander liegende Impulspakete als weiterer Mehrfachimpuls ausgesendet werden, wobei eine Gesamtdauer der beiden Mehrfachimpulse zuzüglich des zweiten Abstands kürzer als ein Minimalabstand üblicher Störimpulse ist, und der Lichtempfänger bereits beim Empfang von mindestens zwei Impulspaketen, die in dem ersten vorbestimmten Abstand liegen, eine Übertragung des Lichts vom Lichtsender detektiert.

6. Verfahren zur Störlichtunterdrückung nach einem der vorstehenden Ansprüche, **dadurch gekennzeichnet, dass** nach dem Empfang eines Impulspakets oder Mehrfachimpulses und einer störungsfreien Bewertung der Übertragung eine Weiterleitung eines Empfangssignals für einen vorbestimmten Zeitraum gesperrt wird, der auf den vorbestimmten Abstand der Impulspakete zueinander oder einen vorbestimmten Abstand der Mehrfachimpulse zueinander abgestimmt ist.

7. Verfahren zur Störlichtunterdrückung nach einem der vorstehenden Ansprüche, **dadurch gekennzeichnet, dass** vom Lichtempfänger (12) entsprechend den empfangenen Lichtimpulsen erzeugte Signalimpulse in ihrer Signalhöhe auf einen vorbestimmten Grenzwert begrenzt werden.

8. Verfahren nach einem der vorstehenden Ansprüche, **dadurch gekennzeichnet, dass** die Lichtimpulse in voneinander beabstandeten Impulspaketen angeordnet sind und innerhalb eines Impulspakets mit einer Trägerfrequenz aufeinander folgen, und im Lichtempfänger (12) unmittelbar nach dem Empfang des Lichtsignals und Umsetzen des Lichtsignals in ein elektrisches Signal eine Bandpassfilterung des elektrischen Signals im Bereich der Trägerfrequenz erfolgt.

9. Verfahren zur Störlichtunterdrückung nach einem der vorstehenden Ansprüche, **dadurch gekennzeichnet, dass** das elektrische Signal integriert und daraufhin mittels einer Schwelle bewertet wird.

10. Messgerät mit einem Lichtsender und einem Lichtempfänger zur Durchführung des Verfahrens nach einem der Ansprüche 1 bis 9, **dadurch gekennzeichnet, dass** der Lichtempfänger (12) einen Pulsbreitenkomparator (22, 30, 32) aufweist, der Signalimpulse eines Empfangssignals unterdrückt, deren Zeitdauer kleiner als ein vorbestimmter Grenzwert und/oder gleich dem vorbestimmten Grenzwert ist.

11. Messgerät nach Anspruch 10, **dadurch gekennzeichnet, dass** der Pulsbreitenkomparator (22, 30, 32) Signalimpulsen, deren Zeitdauer größer als der vorbestimmte Grenzwert oder gleich dem vorbestimmten Grenzwert ist, eine konstante Zeitdauer zuweist.

12. Messgerät nach einem der Ansprüche 10 bis 11, **dadurch gekennzeichnet, dass** der Lichtempfänger einen Resonanzkreis aufweist, dessen Resonanzfrequenz der Mittenfrequenz des Bandpasses entspricht.

13. Messgerät nach einem der Ansprüche 10 bis 12, **dadurch gekennzeichnet, dass** der Lichtempfänger (12) mit allen weiteren Komponenten zur Signalverarbeitung in einem gemeinsamen Gehäuse (40) untergebracht ist.

14. Messgerät nach einem der Ansprüche 10 bis 13, **dadurch gekennzeichnet, dass** der Lichtsender (10) eine Modulationsschaltung zum Modulieren von Impulssignalen mit einer Trägerfrequenz aufweist und dass der Lichtempfänger (12) in Bezug auf einen Signalfluss unmittelbar hinter einem Empfängerfotoelement (14) eine Bandpassschaltung (16) aufweist.

15. Messgerät nach Anspruch 14, **dadurch gekennzeichnet, dass** in dem Lichtempfänger (12) in Bezug auf den Signalfluss unmittelbar hinter dem Empfängerfotoelement (14) eine Verstärkerschaltung (16) mit Bandpasseigenschaften vorgesehen ist.
